# EUROPÄISCHE PATENTSCHRIFT

(11) **EP 1 166 952 B1**
(45) Veröffentlichungstag und Bekanntmachung des Hinweises auf die Patenterteilung: **08.10.2003**
(21) Anmeldenummer: 01114297.3
(22) Anmeldetag: 13.06.2001
(51) Int. Cl.: B23Q 1/01

(54) **NC-gesteuerte Portalfräsmaschine**
Numerically controlled milling machine
Fraiseuse à réglage-NC

(30) Priorität: 20.06.2000 DE 10029326
(43) Veröffentlichungstag der Anmeldung: 02.01.2002
(73) Patentinhaber: FOTEC Forschungs- und Technologiezentrum für Industrie- und Energietechnik GmbH, 09119 Chemnitz (DE)
(72) Erfinder: Scheibner, Heinz, 09224 Grüna (DE); Scharnweber, Franz, 09128 Chemnitz (DE)
(74) Vertreter: Seerig & Hübner

(56) Entgegenhaltungen:
- US-A- 4 229 641
- US-A- 5 584 621

## Beschreibung

Die Erfindung betrifft eine NC-gesteuerte Portalfräsmaschine, die aus einem durch einen Querbalken mit beidseitig angeordneten Pfosten gebildetes Portal besteht, wobei der Querbalken auf den Pfosten in Y-Achsrichtung verfahrbar ist, am Querbalken ein in X-Achsrichtung verfahrbarer Frässchieber mit in Z-Achsrichtung verfahrbarer Frässpindel mit einem Fräswerkzeug und eine Engergiekette angeordnet und geführt sind, sowie durch das Portal ein Maschinenbett mit einem feststehenden Maschinentisch hindurchgeführt ist.

NC-gesteuerte Portalfräsmaschinen mit kartesischen Achsen sind allgemein bekannt. In der, eine Maschine gemäß dem Oberbegriff des Anspruchs 1 offenbarenden DE 3404869 A1 ist eine Portalfräsmaschine beschrieben, bei der ein das Fräsaggregat in Querrichtung führender Querbalken auf stirnseitigen Vertikalführungen zweier senkrechten, ein Portal bildenden Pfosten höhenverfahrbar angeordnet ist. Weiterhin sind sogenannte Flächenportale bekannt, bei denen auf den Pfosten ein Querbalken in Y-Achsrichtung verfahrbar ist, sowie am Querbalken ein in X-Achsrichtung verfahrbarer Frässchieber mit einer in Z-Achsrichtung verfahrbaren Frässpindel mit Fräswerkzeug und eine Energiekette angeordnet und geführt sind. Durch das Portal ist ein Maschinenbett, das einen feststehenden Maschinentisch für das Werkstück trägt, hindurchgeführt. Diese Portalfräsmaschinen mit Flächenportal ermöglichen keine Fünfseitenbearbeitung eines Werkstückes.

Aufgabe der Erfindung ist es, eine Portalfräsmaschine, die aus einem durch einen Querbalken mit beidseitig angeordneten Pfosten gebildetes Portal besteht, wobei der Querbalken auf dem Pfosten in Y-Achsrichtung verfahrbar ist, am Querbalken ein in X-Achsrichtung verfahrbarer Frässchieber mit in Z-Achsrichtung verfahrbarer Frässpindel mit einem Fräswerkzeug und eine Energiekette angeordnet sind, sowie durch das Portal ein Maschinenbett mit einem feststehenden Maschinentisch hindurchgeführt ist, zu entwickeln, das eine Fünfseitenbearbeitung eines Werkstückes ermöglicht.

Erfindungsgemäß wird die Aufgabe dadurch gelöst, daß jeder der Pfosten als ein Rundbogen ausgebildet ist, der mindestens einen Kreisbogen von 180 Grad bildet, die Rundbögen parallel nebeneinander mit ihren Enden auf Fundamenten befestigt angeordnet sind, der Querbalken mittels eines elektronisch gesteuerten Rundbogenlinearantriebes auf den Rundbögen in der Y-Achsrichtung verfahrbar ist, jeder der Rundbögen eine Führung mit Führungsbahnabdeckung für den Querbalken sowie ein Rundbogenmeßsystem für eine Wegsteuerung des Querbalkens aufweist.

Vorteilhaft ist es, daß der Frässchieber mittels eines elektronisch gesteuerten Linearantriebes am Querbalken in X-Achsrichtung verfahrbar ist. Zweckmäßig ist es, wenn der Frässchieber als HTC-Frässchieber mit Einbaumotor für eine Motorspindel des Fräswerkzeuges und mit einem Adapter mit Schnittstelle für Energie- und Sensorikandockung eines nacheinander angeordneten C-Achs-Modules und eines A-Achs-Modules mit dem Fräswerkzeug ausgebildet ist.
Mit dieser beschriebenen technischen Lösung ist eine Fünfseitenbearbeitung eines Werkstückes garantiert.

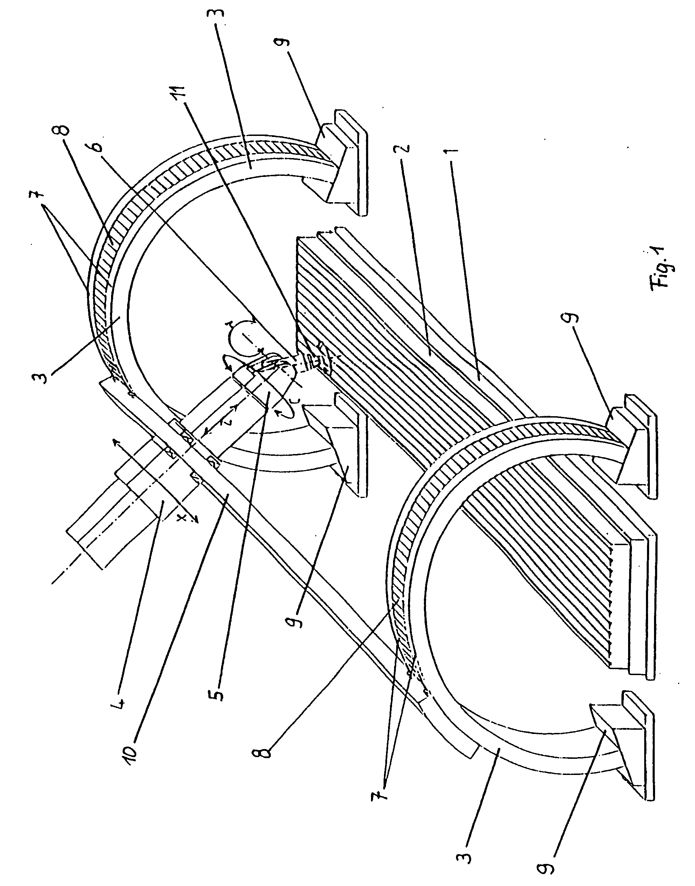

Nachfolgend wird die Erfindung anhand eines Ausführungsbeispieles näher erläutert. Die dazugehörige Zeichnung zeigt eine schematische Darstellung einer NC-gesteuerte Portalfräsmaschine.
Die Portalfräsmaschine besteht aus einem Querbalken 10, der auf zwei parallel nebeneinander angeordnete Rundbögen 3 verfahrbar ist. Die Rundbögen 3 dienen als Pfosten. Der Querbalken 10 ist mittels Rundbogenlinearantriebe 8 auf den Rundbögen und in Führungen 7 mit Führungsbahnabdeckungen in Y-Achsrichtung verfahrbar angeordnet. Ein in der Zeichnung nicht dargestelltes Rundbogenmeßsystem gewährleistet die Wegsteuerung des Querbalkens 10 auf den Rundbögen 3. Der Querbalken 10 trägt einen Frässchieber 4, der auf dem Querbalken 10 in X-Achsrichtung geführt und mittels eines nicht dargestellten elektronisch steuerbaren Linearantriebes verfahrbar ist. Der Frässchieber 4, auf dem eine ebenfalls nicht dargestellte Energiekette geführt angeordnet ist, ist als HTC-Frässchieber mit Einbaumotor für die Motorspindel eines Fräswerkzeuges 11 und mit einem Adapter mit Schnittstelle für Energie- und Sensorikandockung eines nacheinander angeordneten C-Achs-Modules 5 und eines A-Achs-Modules 6 mit dem Fräswerkzeug 11 ausgebildet. Durch das Portal ist ein Maschinenbett 1 mit einem feststehenden Maschinentisch 2 für die Werkstückaufnahme hindurchgeführt. Die Rundbögen 3 weisen einen Kreisbogen von mehr als 180 Grad auf und sind mit ihren Enden auf Fundamenten 9 befestigt.
Damit ist eine Fünfseitenbearbeitung garantiert, was noch durch den Mehrachsfrässpindelkopf des Frässchiebers 4 unterstützt wird.

## Patentansprüche

1. NC-gesteuerte Portalfräsmaschine, die aus einem durch einen Querbalken (10) mit beidseitig angeordneten Pfosten (3) gebildetes Portal besteht, wobei der Querbalken auf den Pfosten in Y-Achsrichtung verfahrbar ist, am Querbalken ein in X-Achsrichtung verfahrbarer Frässchieber (4) mit in Z-Achsrichtung verfahrbarer Frässpindel mit einem Fräswerkzeug (11) und einer Energiekette angeordnet und geführt sind, sowie durch das Portal ein Maschinenbett (1) mit einem feststehenden Maschinentisch (2) hindurchgeführt ist, **dadurch gekennzeichnet, daß** jeder der Pfosten als ein Rundbogen (3) ausgebildet ist, der mindestens einen Kreisbogen von 180 Grad bildet, die Rundbögen (3) parallel nebeneinander mit ihren Enden auf Fundamenten (9) befestigt angeordnet sind, der Querbalken (10) mittels eines elektronisch gesteuerten Rundbogenlinearantriebes (8) auf den Rundbögen (3) in der Y-Achsrichtung verfahrbar ist, jeder der Rundbögen (3) eine Führung (7) mit Führungsbahnabdeckung für den Querbalken (10) sowie ein Rundbogenmeßsystem für eine Wegsteuerung des Querbalkens (10) aufweist.

2. NC-gesteuerte Portalfräsmaschine nach Anspruch 1, **dadurch gekennzeichnet, daß** der Frässchieber (4) mittels eines elektronisch gesteuerten Linearantriebes am Querbalken (10) in X-Achsrichtung verfahrbar ist.

3. NC-gesteuerte Portalfräsmaschine nach Anspruch 1, **dadurch gekennzeichnet, daß** der Frässchieber (4) als HTC-Frässchieber mit Einbaumotor für eine Motorspindel des Fräswerkzeuges (11) und mit einem Adapter mit Schnittstelle für Energie- und Sensorikandockung eines nacheinander angeordneten C-Achs-Modules (5) und eines A-Achs-Modules (6) mit dem Fräswerkzeug (11) ausgebildet ist.

## Claims

1. NC-controlled portal milling machine which consists of a portal formed by a crossbeam (10) with uprights (3) arranged on both sides, the crossbeam being traversable on the uprights in the Y-axis direction, a milling slide (4) which is traversable in the X-axis direction and has a milling spindle, traversable in the Z-axis direction, with a milling tool (11) and an energy chain being arranged and guided on the crossbeam, and a machine bed (1) with a fixed machine table (2) being passed through the portal, **characterized in that** each of the uprights is designed as a round arch (3) which forms at least one arc of a circle of 180 degrees, the round arches (3) are arranged parallel to one another in such a way as to be fastened with their ends to foundations (9), the crossbeam (10) is traversable on the round arches (3) in the Y-axis direction by means of an electronically controlled round-arch linear drive (8), each of the round arches (3) has a guide (7) with a guideway cover for the crossbeam (10) and a round-arch measuring system for a path control of the crossbeam (10).

2. NC-controlled portal milling machine according to Claim 1, **characterized in that** the milling slide (4) is traversable on the crossbeam (10) in the X-axis direction by means of an electronically controlled linear drive.

3. NC-controlled portal milling machine according to Claim 1, **characterized in that** the milling slide (4) is designed as an HTC milling slide with a built-in motor for a motor spindle of the milling tool (11) and with an adapter having an interface for energy and sensor-system docking of a C-axis module (5) and an A-axis module (6), arranged one after the another, with the milling tool (11).

## Revendications

1. Fraiseuse à portique à commande numérique qui se compose d'un portique constitué par une poutrelle transversale (10) avec des colonnettes (3) disposées des deux côtés, la poutrelle transversale pouvant se déplacer sur les colonnettes dans le sens de l'axe Y, un coulisseau de fraisage (4) mobile dans le sens de l'axe X et muni d'une broche de fraisage mobile dans le sens de l'axe Z avec un outil de fraisage (11) et une chaîne d'énergie étant disposé et guidé sur la poutrelle transversale et un banc de machine (1) comprenant une table de machine fixe (2) étant traversé par le portique, **caractérisée en ce que** chacune des colonnettes est réalisée sous la forme d'un arc en plein cintre (3) qui forme au moins un arc de cercle de 180 degrés, les arcs en plein cintre (3) sont fixés parallèlement l'un à côté de l'autre à la fondation (9) avec leurs extrémités, la poutrelle transversale (10) peut être déplacée dans le sens de l'axe Y sur les arcs en plein cintre (3) à l'aide d'un mécanisme d'entraînement linéaire d'arc en plein cintre à commande électronique, chacun des arcs en plein cintre (3) présente un guide (7) muni d'une protection de voie de guidage pour la poutrelle transversale (10) ainsi qu'un système de mesure d'arc en plein cintre pour commander la course de la poutrelle transversale (10).

2. Fraiseuse à portique à commande numérique selon la revendication 1, **caractérisée en ce que** le coulisseau de fraisage (4) peut se déplacer dans le sens de l'axe X sur la poutrelle transversale (10) à l'aide d'un mécanisme d'entraînement linéaire à commande électronique.

3. Fraiseuse à portique à commande numérique selon la revendication 1, **caractérisée en ce que** le coulisseau de fraisage (4) est réalisé sous la forme d'un coulisseau de fraisage HTC à moteur intégré pour une broche motorisée de l'outil de fraisage (11) et comporte un adaptateur muni d'une interface pour l'accueil de l'énergie et des capteurs d'un module d'axe C (5) et d'un module d'axe A (6) disposés l'un à la suite de l'autre avec l'outil de fraisage (11).
